# EUROPEAN PATENT SPECIFICATION

(11) **EP 1 860 918 B1**
(45) Date of publication and mention of the grant of the patent: **05.07.2017**
(21) Application number: 06010674.7
(22) Date of filing: 23.05.2006
(51) Int. Cl.: H04S 7/00, G01C 21/36

(54) **Communication system and method for controlling the output of an audio signal**
Kommunikationssystem und Verfahren zur Steuerung der Ausgabe eines Audiosignals
Système de communication et méthode pour contrôler la restitution d'un signal audio

(43) Date of publication of application: 28.11.2007
(73) Proprietor: Harman Becker Automotive Systems GmbH, 76307 Karlsbad (DE)
(72) Inventor: Buck, Markus, 88400 Biberach (DE); Haulick, Tim, 89143 Blaubeuren (DE); Kolano, Guido, 73064 Salach (DE)
(74) Representative: Grünecker Patent- und Rechtsanwälte PartG mbB

(56) References cited:
- EP-A- 0 809 413
- EP-A1- 1 494 364
- WO-A-2004/104520
- JP-A- 2006 050 083
- JP-A- 2006 222 686
- US-A1- 2005 128 106

## Description

### Field of Invention

The present invention relates to an in-vehicle communication system and method for controlling the output of an audio signal to be output by at least one loudspeaker.

### Background of the Invention

Passengers in vehicles, in particular the driver of the vehicle, are affected by many different acoustic signals during the drive. These acoustic signals, e.g. music, news, route guidance signals, phone calls, audio warnings, may be provided by, e.g., a radio, a CD player, a navigation system, a mobile phone, a parking assistance system or an in-vehicle telephony system or by combinations of the above. Additional to these acoustic signals output by a loudspeaker system installed in the vehicle, the passengers in vehicles may be disturbed by background noise, especially at high traveling speeds.

Usually, the consciousness of passengers, especially of the driver, in a vehicle is overloaded by this plentitude of different acoustic signals, in particular if the passengers additionally communicate with each other. Due to this overload of information in the vehicle, it is not possible, especially for the driver, to distinguish between more important and less important acoustic signals in the vehicle. A more important acoustic signal may be, e.g., an information provided by a route guidance signal, whereas a less important acoustic signal may be, e.g., an audio signal provided by a CD player.

US 2005/0128106 A1 discloses a navigation system comprising a navigation unit, an audio unit, a speaker control and speakers wherein some music output can be modified when an output request for voice information is received from a user.

EP 1 494 364 A1 discloses a device for controlling audio data output in a vehicle wherein audio signals from a plurality of information sources are redirected in different combinations to different output channels after relative weighting of the amplitudes of the audio signals in each combination.

In conclusion, there is a need for supporting the passengers, in particular the driver, of a vehicle to distinguish the acoustic signals output by a loudspeaker system in a vehicle from each other to easily recognize the importance of these acoustic signals.

Thus, it is an object of the present invention to provide a communication system and method for providing more informative audio signals in a vehicle, in particular in an automobile.

### Description of the Invention

The above mentioned object is achieved by the communication system installed in a vehicle according to claim 1. The vehicle having the communication system installed may be any transporting means, in particular an automobile. The audio signal may be any audio signal provided by a source, wherein the source of an audio signal is the origin of the audio signal, such as a navigation system, a mobile phone, an in-vehicle telephony system or any other source as mentioned above. A source is configured to provide a signal, if the source can output a signal, e.g. by a source output.

The audio signal may be, e.g., a verbal (speech) or non-verbal signal, wherein a verbal signal may contain information about a voice of a speaker and about the words to be output and a non-verbal signal may contain information about a beep or a beep sequence providing beeps having different pitches, volumes and/or time variable intervals.

A content of an audio signal may be any kind of information contained in the audio signal except for information concerning the source of the audio signal. A content of an audio signal may be, e.g., a part of or the whole information contained in the audio signal. If, e.g., an audio signal is a route guidance signal to be output as the voice message "at the next corner please turn left", a content of the route guidance signal may be the information "turn left" or the information "at the next corner" or the whole information "at the next corner please turn left". In a further embodiment, a content of an audio signal may be the information about the kind of the audio signal, e.g., whether the audio signal is a verbal signal or a non-verbal signal.

According to the invention, the communication system comprises signal analyzing means configured to determine a content and a source of an audio signal. For example, at least one audio signal can be received by the signal analyzing means, in particular by an input of the signal analyzing means. A content and a source of the at least one audio signal may be determined on the basis of the received audio signal and/or on the basis of at least one further signal provided by the audio signal source and received by the signal analyzing means. The further signal may be related to the audio signal and may be provided with information about the content and/or source of the audio signal.

The signal analyzing means is configured to determine a content and a source of the audio signal, for example by analyzing, e.g. the spectral envelope or other feature vectors, for example comprising the pitch of the audio signal. Further, the audio signal can be pre-processed by Fast Fourier Transformation or other pre-processing steps known in the art, as transformation to a cepstral representation or to line spectral frequencies or the generation of predictor coefficients from the received signals. All of these methods have in common that the later processing of the audio signals may be based on frames or blocks that consist of a pre-determined number of contiguous samples of speech. The relevant signal parameters determined during the analysis may be, e.g., the formants, the pitch, the mean power and the spectral envelope.

In particular, the audio signal may be recorded or modified by the signal analyzing means dependent on the determined content and source of the audio signal. For example, the audio signal can be modified such that the audio signal is delayed dependent on the determined content or source. The signal analyzing means can function as a filter for audio signals which, e.g., delays or mutes the output of an audio signal dependent on the content or source of the audio signal. If, e.g., the attention of the driver of an automobile is attracted by heavy traffic, he might prefer not to receive any audio signals from a mobile phone. In this case, it is advantageous if the analyzing means can function as a delaying or deleting filter for audio signals output by a mobile phone.

In an embodiment, the signal analyzing means can comprise an output configured to output the audio signal, in particular the audio signal of which a content and source has been determined. The audio signal to be output can be recorded or modified as described above by the signal analyzing means.

In particular, the signal analyzing means may be configured to output the received audio signals and to output additional signals corresponding to the determined content and source of the audio signals. In one embodiment, the signal analyzing means analyze the audio signals and output these signals to be received by the signal processing means. Concurrently to the output of the audio signals, additional signals may be provided by the signal analyzing means and may be output by the signal analyzing means to be received by the signal processing means, wherein the additional signals, for example, consist of the determined content and source of the audio signals. In this case, the signal analyzing means and/or the signal processing means can distinguish between the original audio signal and the determined content and source of the audio signal.

In accordance with the invention, the communication system comprises signal processing means comprising an input for receiving an audio signal, in particular the audio signal output by the signal analyzing means, and an output for outputting at least one loudspeaker input signal. The audio signal is processed dependent on the determined content and source of the audio signal to obtain the loudspeaker input signal based on the audio signal. Generally, a loudspeaker input signal is an input signal to be received by at least one loudspeaker.

For example, dependent on the determined content and source of the audio signal, the signal processing means processes, e.g. upgrades and/or modifies, the audio signal to obtain at least one loudspeaker input signal, for example containing acoustic effects to adapt the loudspeaker input signal, for example, to the importance of the content of the audio signal. To upgrade or modify an audio signal means to add or delete or change an information contained in the audio signal. In particular, this information contained in the audio signal is an information concerning the kind of output of the loudspeaker output signal, for example the volume of the signal. If, e.g., the audio signal is provided by a navigation system and contains the information "turn left in 5 meters" in contrast to the information "turn left in 500 meters", then the processing means processes the audio signal, for example, by modifying, e.g. increasing, the volume of the audio signal dependent on the determined content (in particular "in 5 meters") of the audio signal. A loudspeaker output signal is thus obtained which differs from the loudspeaker output signal based on the information "turn left in 500 meters".

In a further embodiment, if, e.g., the audio signal is provided by a mobile phone and contains information about the caller, for example, that the caller is a family member or a business partner, then the processing means processes the audio signal for example by dedicating one or more pre-determined loudspeakers to each caller or group of callers. In this case, it is advantageous that a driver or any other passenger in the vehicle can distinguish which caller or group of callers is phoning by recognizing which loudspeaker outputs the phone call.

In particular, the signal processing means may be configured to receive any signal output by the signal analyzing means. The signal processing means may process the audio signals dependent on the additional signals output by the analyzing means to obtain loudspeaker input signals.

The communication system of the invention comprises a loudspeaker system comprising at least one loudspeaker mounted in the vehicle, the loudspeaker comprising an input for receiving the at least one loudspeaker input signal and an output for outputting at least one loudspeaker output signal based on the at least one loudspeaker input signal.

The loudspeaker system may be any loudspeaker system configured to receive loudspeaker input signals and configured to output loudspeaker output signals. Preferably, the loudspeaker system, in particular each loudspeaker, can be adjusted by any passenger in the vehicle with respect to the volume and/or pitch played back by each loudspeaker.

In particular, the loudspeaker system may be configured to receive a loudspeaker input signal and configured to output more than one loudspeaker output signals based on the loudspeaker input signal.

To summarize, the communication system according to the present invention is advantageous, since the passengers, in particular the driver, in a vehicle are supported in recognizing from which source an audio signal is provided and what kind of information is contained in the audio signal. Therefore, the passengers, in particular the driver, in a vehicle are supported in distinguishing different kinds of acoustic signals in the vehicle, which further increases the safety of the travel.

The at least one audio signal source of the communication system provided herein can be a navigation system, and the audio signal can be a route guidance signal. As an alternative, the at least one audio signal source can be a mobile phone or an in-vehicle telephony system by which front seat and back seat passengers can communicate via one ore more telephones.

Each of the above mentioned audio signal sources can usually provide many various audio signals in the communication system installed in a vehicle. Navigation systems are well-known in the art and usually provide various route guidance signals. However, a navigation system can further provide signals containing information about, e.g. traffic jams or weather conditions. Dependent on the content of the audio signal provided by the navigation system, the processing means processes the audio signal to obtain a loudspeaker input signal based on the audio signal, for example to obtain a loudspeaker input signal adapted to the importance of the content of the audio signal.

If, e.g., an audio signal as received by the signal analyzing means contains information about a traffic jam, the audio signal may be processed such that a loudspeaker input signal is obtained containing added acoustic effects, e.g. increased volume or pitch, compared to the audio signal originally provided by the navigation system. In this case, the driver of the vehicle could easily recognize that the signal output by the loudspeaker contains important information compared to other audio signals provided by the navigation system.

If, e.g., an audio signal is provided by a mobile phone and contains the information that a business partner is calling, the audio signal can be processed such that a loudspeaker input signal is obtained containing acoustic effects, e.g. increased volume, or the loudspeaker input signal may be dedicated to a pre-determined loudspeaker of the loudspeaker system. In this case, the driver of the vehicle could easily recognize who or which group of callers is phoning and the intelligibility of the verbal communication between the driver and the caller is improved by providing the loudspeaker input signal to a loudspeaker closest to the driver.

Likewise, an in-vehicle telephony system can be used as an audio signal source. In-vehicle telephony systems are well-known in the art and enable improved verbal communication between passengers in a vehicle by using microphones and loudspeakers for each passenger, wherein the microphones and loudspeakers are, e.g., mounted in each seat of the vehicle or provided in a headset for each passenger.

If, e.g., more than two passengers communicate in the vehicle via the telephony system, the processing means can process the audio signals provided by the telephony system dependent on the passenger speaking. For example, a loudspeaker input signal is obtained containing pre-determined acoustic effects, such as increased volume, if the audio signal is generated from a first passenger, whereas the loudspeaker input signal obtained from an audio signal generated from a second passenger contains a different acoustic effect, such as decreased volume. Further, it is possible that different audio signals are provided to different loudspeakers dependent on the passenger generating the audio signal. In this case, the listener can easily recognize who is speaking dependent on the kind of output of the loudspeaker output signal.

In a further embodiment, the audio signal source may be a parking assistance system, guiding the driver of the vehicle to move the vehicle, into a parking space. Likewise to the above, the processing means processes the audio signal, for example, such that the obtained loudspeaker input signal is provided to a specific loudspeaker dependent on the space left in the parking space. For example, the loudspeaker input signal can be provided to the loudspeaker closest to the driver, if there is not much space left instead of a loudspeaker far away from the driver. In this case, the driver is further aided in moving the vehicle into the parking space.

The signal analyzing means of the communication system provided herein can be configured to receive more than one, preferably more than two, audio signals from at least one, preferably from at least two, audio signal sources at the same time.

Preferably, the signal analyzing means as described above can receive more than one, in particular more than two, more particular more than three, audio signals. The ability of receiving more than one audio signal at the same time is especially advantageous, if the audio signal source, for example a navigation system and/or a multi-channel source, in particular a stereo source, provides more than one audio signal at the same time, for example the information "turn left in 200 meters" to indicate the turn in 200 meters and "use left-hand lane" as a preparation for the turn. Dependent on the determined contents, the analyzing means can for example delay or delete one of the two audio signals.

Further, the more than one audio signals may be provided by at least two, preferably by at least three, audio signal sources. As described above, such audio signal sources may be a navigation system and/or a mobile phone and/or an in-vehicle communication system and/or a parking assistance system.

In an preferred embodiment, each of the audio signals is processed dependent on the content and source of each of the audio signals.

The fact that the signal analyzing means are configured to receive more than one audio signal, from at least one or more, in particular different, audio signal, sources at the same time is advantageous, since the diverse audio signals can be provided concurrently to each other by the different audio signal sources without overloading the communication system and/or without forcing the signal analyzing means to delete or delay one or more of the audio signals.

The signal processing means of the communication system as provided herein may be configured to set the volume or the pitch of the at least one loudspeaker input signal or to provide the at least one loudspeaker input signal with acoustic effects, in particular reverberation effects, or one or more combinations of the above.

Preferably, the processing means as described above can set or modify, e.g., the volume or pitch of a loudspeaker input signal or provide the loudspeaker input signal with acoustic effects dependent on the content and source determined by the signal analyzing means.

In particular, the processing means processes an audio signal dependent on the determined content and source such that an audio signal provided by a first audio signal source may be processed differently than an audio signal provided by a second and/or third and/or fourth audio signal source. In a particular embodiment, a first audio signal containing a specific information may be processed differently than a second and/or third and/or fourth audio signal, wherein the audio signals may be provided at the same time or not and wherein the audio signals may be provided by the same and/or different audio signal sources.

If, e.g., a first ("turn left in 200 meters") and second ("use the left-hand lane") audio signals are provided by a navigation system, the processing means may process the first audio signal such that a first loudspeaker input signal is obtained containing the, preferably acoustic, information "double volume", wherein the second audio signal is processed such that the second loudspeaker input signal contains the information "to be outputted by the left-hand loudspeaker". Further, one of the two audio signals may be delayed by the processing means or by the analyzing means such that the two loudspeaker output signals depending on the audio signals are output subsequently.

Likewise, if, e.g., a first audio signal is provided by a navigation system and a second audio signal is provided by a mobile phone, the processing means may process the first audio signal such that a first loudspeaker input signal is obtained containing the information "double volume", wherein the second audio signal is processed such that the second loudspeaker input signal contains the information "increased pitch". Further, one of the two audio signals may be delayed by the processing means or by the analyzing means such that the two loudspeaker output signals depending on the audio signals are output subsequently.

Likewise, if, e.g., the first and second audio signal are provided by a navigation system and a third audio signal is provided by a mobile phone, the processing means may process the first audio signal such that a first loudspeaker input signal is obtained containing the information "decreased pitch and double volume", wherein the second audio signal is processed such that the second loudspeaker input signal contains the information "half volume", and wherein the third audio signal is processed such that the third loudspeaker input signal contains the information "short reverberation". Further, two of the three audio signals may be delayed by the processing means or by the analyzing means such that the three loudspeaker output signals depending on the audio signals are output subsequently.

In a further embodiment, a reverberation effect can be used to prompt a passenger, in particular a driver, in the vehicle to receive the impression that a loudspeaker output signal ("turn left in 200 meters") is farther away than another loudspeaker output signal ("turn left in 20 meters") containing no or a different reverberation effect.

In particular, any information contained in the loudspeaker input signal, such as "double volume", "increased pitch", "short reverberation" and so on, can further comprise details concerning the quantity of these acoustic effects, expressed in, for example, percent, decibel, frequency, and so on.

Some acoustic effects, such as reverberation effects, can be provided by a FIR-Filter (finite impulse response filter) and/or an IIR-Filter (infinite impulse response filter) and/or a time variable filter which filters are well-known in the art. One or more of these filters can be applied to the audio signal while the audio signal is processed by the processing means to provide the obtained loudspeaker input signal with pre-determined acoustic effects.

In one embodiment, the audio signal may be processed by applying one or more pre-determined FIR-, IIR- and/or time variable filters dependent on the content and/or source of the audio signal. In particular, a first pre-determined filter may be applied to a first audio signal, and a second pre-determined filter may be applied to a second audio signal to obtain a first and a second loudspeaker input signal providing different acoustic effects based on the different filters applied to the audio signals. In a further embodiment, different filters may be applied to the audio signals dependent on the loudspeaker, in particular the location of the loudspeaker in the vehicle. In particular, dependent on the content and/or source of the audio signal, a pre-determined set of filters may be applied to the audio signal to obtain one or more loudspeaker input signals based on the determined content and source of the audio signal.

The acoustic effects described above support the passengers, in particular the driver, in a vehicle in distinguishing between the various loudspeaker output signals output in the vehicle.

The loudspeaker system of the communication system as provided herein may comprise at least two, preferably at least three or four, loudspeakers.

The communication system comprising a loudspeaker system comprising more than one loudspeakers is advantageous, since two or more loudspeakers provide the possibility to process even more complex acoustic effects in the vehicle, in particular to provide surround sound and some reverberation effects.

In one embodiment, one or two of at least three or four of the loudspeakers may be used to output the loudspeaker output signal, whereas the remaining loudspeakers do not output any loudspeakers output signal.

For example, the audio signal is a route guidance signal and contains the information "turn left" or "turn right". According to a preferred embodiment, the route guidance signal is processed such that a loudspeaker input signal is obtained containing the additional information "to be output merely by the left loudspeaker" or "to be output merely by the right loudspeaker". The loudspeaker output signal containing the information "turn left" or "turn right" based on the loudspeaker input signal is thus output merely by the left or right loudspeaker and, therefore, supports the passenger's and/or driver's perception concerning the content of the loudspeaker output signal.

In particular, one loudspeaker input signal is obtained by processing one audio signal such that one loudspeaker output signal based on the one loudspeaker input signal and output by one of the loudspeakers shows a time delay or volume difference with respect to at least one other loudspeaker output signal output by at least one of the other loudspeakers.

It may be advantageous to have a volume difference or time delay between the loudspeaker output signals to, for example, emphasize one of the output signals, e.g. the louder output signal and/or the first output signal, or to generate a pre-determined surround sound in the vehicle dependent on the determined content and source of the audio signals on which the loudspeaker output signals are based.

The communication system according to the present invention may further comprise a virtual loudspeaker to output the loudspeaker output signal at a specific spatial position, wherein the virtual loudspeaker is generated by the signal processing means. In an preferred embodiment, the virtual loudspeaker may be movable.

The passengers, in particular the driver, in a vehicle may get the impression that the loudspeaker output signals are not output by the loudspeakers, preferably mounted in the vehicle, but are output by a virtual loudspeaker located at a pre-determined spatial position in the vehicle. Providing a virtual loudspeaker may be advantageous, since the virtual loudspeaker may be located at a position in the vehicle corresponding to the content and/or source of the loudspeaker output signal. For example, if the signal to be output contains the information "turn left", the virtual loudspeaker can be located next to the driver on his left-hand side.

In a further embodiment, the virtual loudspeaker may move in the vehicle, preferably at a pre-determined velocity. Due to the presence of a moving virtual loudspeaker, a passenger, in particular the driver, in the vehicle, may receive the impression that the loudspeaker output signal functions as an acoustic indicator, preferably pointing at a pre-determined direction. If, e.g., the audio signal contains the information "turn left", the processing means generates a virtual loudspeaker moving, for example, from the driver to the left-hand side or from the back of the vehicle to the left-hand side of the vehicle.

A virtual loudspeaker, in particular a moving virtual loudspeaker, can be generated by the processing means by applying diverse filters, e.g. FIR-filter, IIR-filter, time variable filter.

To summarize, a virtual loudspeaker, in particular a moving virtual loudspeaker, is advantageous, since the perception of the passengers, in particular of the driver, in the vehicle is further supported with respect to the information contained in the loudspeaker output signal.

The communication system as provided herein, preferably the signal processing means, may be configured to be manually or verbally adjusted by one or more than one passengers in the vehicle, preferably by the driver of the vehicle.

In particular, the communication system of the present invention may be configured to be adjustable, preferably programmable, by each passenger including the driver of the vehicle. The adjusting or programming can be carried out manually or verbally. To further simplify the handling of the communication system, at least one keypad and/or microphone may he mounted in the vehicle, preferably mounted in or in proximity to each seat of the vehicle such that each passenger, in particular the driver, in the vehicle may manually and/or verbally adjust the communication system by using the keypad and/or the microphone.

In a preferred embodiment each loudspeaker of the loudspeaker system may be adjustable by each passenger including the driver in the vehicle. In this case, it is advantageous that each passenger can decide about, e.g., the volume of the loudspeaker next to him or, e.g., if he wants to participate or not in a communication in the vehicle via a microphone closest to him.

In a further embodiment, the adjusting of the communication system, in particular of the signal processing means, carried out by a driver may be superordinated compared to an adjusting carried out by any other passenger in the vehicle. In this case, the driver can, e.g., undo or change the adjusting carried out by, for example, passengers in the back of the vehicle, for example children.

In a preferred embodiment of the present invention, at least two of the components of the communication system as provided herein may be connected to each other by a cable connection or, preferably, by a wireless connection. The wireless connection, for example, may be realized by the Bluetooth technology, radio technology including the Wireless Local Area Network (WLAN) and/or infrared data transmission.

The communication system according to the present invention may further be provided such that the content of the audio signal comprises a route guidance information, and wherein one loudspeaker output signal is output by one or two loudspeakers located at a position in the vehicle corresponding to the route guidance information.

It is advantageous, for example, to have a loudspeaker output signal containing a route guiding information, such as "turn left", output by one or two loudspeakers located at the left-hand side of the vehicle. The output of the signal at the left-hand side of the vehicle may further support the driver in recognizing as fast as possible the content of the loudspeaker output signal and may, thus, decrease the driver's reaction time.

The above mentioned object of the invention is also achieved by providing a method for controlling the output of an audio signal in a communication system installed in a vehicle, comprising the steps of:
Providing at least one audio signal;
Determining a content and a source of the audio signal based on the audio signal;

Processing the audio signal dependent on the content and the source of the audio signal to obtain at least one loudspeaker input signal based on the audio signal;

Outputting at least one loudspeaker output signal based on the at least one loudspeaker input signal by at least one loudspeaker.

The descriptions, explanations and definitions used in connection with the communication system in accordance with the present invention also apply to the above mentioned method and the preferred embodiments indicated in the following.

In particular, the providing of at least one audio signal of the method as provided herein may be realized by at least one audio signal source as comprised in the communication system of the present invention.

Likewise, the determining of a content and a source of the audio signal may be realized by the signal analyzing means as comprised in the communication system of the present invention.

In particular, the signal processing means as comprised in the communication system of the present invention may realize the processing of the audio signal of the method as provided herein.

In a preferred embodiment, the loudspeaker system of the communication system of the present invention may realize the outputting of the at least one loudspeaker output signal of the method as provided herein.

To summarize, the inventive method as provided herein supports the passengers, in particular the driver, in a vehicle to improve recognition from which source an audio signal is provided and what kind of information is contained in the audio signal. The audio signal is processed dependent on a content and source to obtain a loudspeaker input signal, preferably adapted to this content and source by pre-determined acoustic effects, to be received by a loudspeaker system in the vehicle. Therefore, the passengers, in particular the driver, in a vehicle are supported in distinguishing between different kinds of acoustic signals in the vehicle, which further increases the safety of the travel.

The audio signal can be provided by a navigation system and is preferably a route guidance signal. As an alternative, the audio signal may be provided by a mobile phone or by an in-vehicle telephony system.

In a preferred embodiment, the method according to the present invention may be provided, wherein more than one, preferably more than two, audio signals from at least one, preferably from at least two, audio signal sources are provided at the same time.

The method as provided herein comprises the processing step, wherein the processing of the audio signal may preferably comprise setting the volume or the pitch of the loudspeaker input signal or providing the loudspeaker input signal with acoustic effects, in particular reverberation effects, or one or more combinations of the above.

In a preferred embodiment, the at least one loudspeaker output signal is output by at least two, preferably at least three or four, loudspeakers.

In particular, one loudspeaker output signal output by one of the loudspeakers may show a time delay or volume difference with respect to at least one other loudspeaker output signal output by at least one of the other loudspeakers.

The method as provided herein comprises the processing step, wherein the processing of the audio signal may comprise generating a virtual loudspeaker to output the loudspeaker output signal at a pre-determined spatial position. In particular, the virtual loudspeaker moves.

In a preferred embodiment of the present invention, the controlling of the output of the audio signal, preferably the processing of the audio signal, of the method as provided herein can be adjusted manually or verbally by one or more than one passengers in the vehicle, preferably by the driver of the vehicle.

The method as provided herein comprises providing at least one audio signal, wherein the content of the audio signal may comprise a route guidance information, and wherein the processing of the audio signal may be performed such that one loudspeaker output signal may be output by one or two loudspeakers located at a position in the vehicle corresponding to the route guidance information.

In addition to the communication system and the method for controlling the output of an audio signal, a computer program product is provided, comprising one or more computer readable media having computer-executable instructions for performing the steps of the method as provided herein.

Additional features and advantages of the invention are described in the following with reference to the drawings.
Fig. 1 schematically illustrates an example of a communication system for controlling the output of an audio signal in accordance with the present invention.
Fig. 2 shows one embodiment of the present invention illustrating a particular function of the signal analyzing means shown in Fig. 1.
Fig. 3 shows another embodiment of the present invention illustrating a particular function of the signal analyzing means shown in Fig. 1.

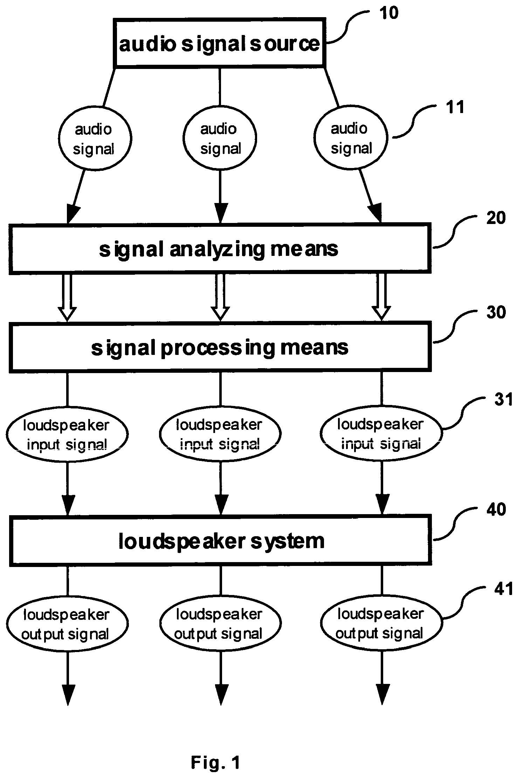

Fig. 1 illustrates one example of a communication system of the present invention comprising an audio signal source 10, signal analyzing means 20, signal processing means 30, and a loudspeaker system 40. The audio signal source 10 provides audio signals 11, which are received by the signal analyzing means 20. The signal analyzing means 20 determines a content and source of each of the audio signals 11 and outputs the determined audio signals. After determining, the audio signals are received by the signal processing means 30, which processes the audio signals to obtain loudspeaker input signals 31. The processing of the audio signals is carried out dependent on the determined content and source of each of the audio signals, for example by setting the volume of the loudspeaker input signals or by providing the loudspeaker input signals 31 to a pre-determined loudspeaker of the loudspeaker system 40. After processing, the loudspeaker input signals 31 are output by the signal processing means and received by the loudspeaker system 40 which outputs loudspeaker output signals 41 based on the corresponding loudspeaker input signals 31.

In particular, the audio signals 11 may be provided by more than one audio signal source 10 as already described above.

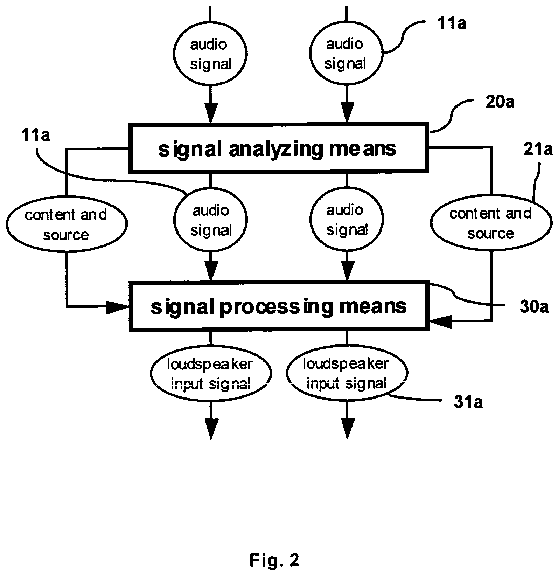

Fig. 2 shows a first embodiment of the communication system as illustrated in Fig. 1. In this case, the signal analyzing means 20a receives the audio signals 11a and determines their content and source as described above. After determining, the audio signal 11a is transmitted to the signal processing means 30a. At the same time, further signals 21 a are provided by the analyzing means 20a corresponding to the determined content and source of each of the transmitted audio signals 11a and are also transmitted to the signal processing means 30a. Both kinds of signals, the "content and source"- signals 21 a provided by the analyzing means 20a and the audio signals 11a, are received by the signal processing means 30a and processed accordingly to obtain the loudspeaker input signals 31a as described above.

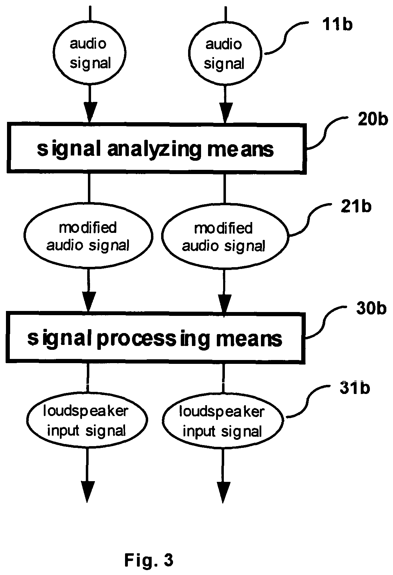

Fig. 3 shows a second embodiment of the communication system as illustrated in Fig. 1. In this case, the analyzing means 20b determines a content and source of the audio signals 11b received and, after determining, modifies the audio signals 11b such that the modified audio signals 21b to be output by the signal analyzing means 20b contain additional information compared to the audio signals 11b as originally received by the signal analyzing means 20b. The additional information contains the determined content and source of the audio signal 11b such that this information is readable by the processing means 30b to further simplify the processing step of each of the audio signals.

The above described examples shall serve as examples illustrating features and advantages of the invention, in particular by reference to specific embodiments of the invention. It is to be understood that some or all of the above described features can also be combined in different ways than shown in the above-referenced drawings.

## Claims

1. Communication system configured to control the output of an audio signal and installed in a vehicle, comprising
at least one audio signal source (10) configured to provide at least one audio signal (11b);
signal analyzing means (20b) configured to determine a content and a source of the audio signal (11b) based on the audio signal and to modify the audio signal (11b) to obtain a modified audio signal (21b) containing additional information; wherein the additional information comprises the determined content and source of the audio signal (11b);
signal processing means (30) comprising an input for receiving the modified audio signal (21b) and an output for outputting at least one loudspeaker input signal (31b), and configured to process the modified audio signal (21b) dependent on the determined content and source of the audio signal (11b) to obtain the at least one loudspeaker input signal (31b) based on the modified audio signal (21b); and
a loudspeaker system (40) comprising at least one loudspeaker mounted in the vehicle and comprising an input for receiving the at least one loudspeaker input signal (31b) and an output for outputting at least one loudspeaker output signal (41) based on the at least one loudspeaker input signal (31b).

2. The communication system of claim 1, wherein the at least one audio signal source (10) is a navigation system and the audio signal (11b) is preferably a route guidance signal.

3. The communication system of claim 1, wherein the at least one audio signal source (10) is a mobile phone or an in-vehicle telephony system.

4. The communication system of one of the preceding claims, wherein the signal analyzing means (20b) is configured to receive more than one, preferably more than two, audio signals (11b) from at least one, preferably from at least two, audio signal sources (10) at the same time.

5. The communication system of one of the preceding claims, wherein the signal processing means (30) is configured to set the volume or the pitch of the at least one loudspeaker input signal (31b) or to provide the loudspeaker input signal (31b) with acoustic effects, in particular reverberation effects, or one or more combinations of the above.

6. The communication system of one of the preceding claims, wherein the loudspeaker system (40) comprises at least two, preferably at least three or four, loudspeakers.

7. The communication system of claim 6, wherein one loudspeaker input signal (31b) is obtained by processing one modified audio signal (21b) such that one loudspeaker output signal (41) based on the one loudspeaker input signal (31b) and output by one of the loudspeakers shows a time delay or volume difference with respect to at least one other loudspeaker output signal (41) output by at least one of the other loudspeakers.

8. The communication system of one of the preceding claims, comprising a virtual loudspeaker to output the loudspeaker output signal at a specific spatial position, wherein the virtual loudspeaker is generated by the signal processing means (30b).

9. The communication system of claim 8, wherein the virtual loudspeaker is movable.

10. The communication system of one of the preceding claims, wherein the communication system, preferably the signal processing means (30b), is configured to be manually or verbally adjusted by one or more than one passengers in the vehicle, preferably by the driver of the vehicle.

11. The communication system of one of the preceding claims, wherein the content of the audio signal (11b) comprises a route guidance information, and wherein one loudspeaker output signal (41) is output by one or two loudspeakers located at a position in the vehicle corresponding to the route guidance information.

12. A method for controlling the output of an audio signal in a communication system installed in a vehicle, comprising the steps of:
Providing at least one audio signal (11 b);
Determining a content and a source of the audio signal (11b) based on the audio signal;
Modifying the audio signal (11b) to obtain a modified audio signal (21b) containing additional information; wherein the additional information comprises the determined content and source of the audio signal (11b);
Processing the modified audio signal (21 b) dependent on the content and the source of the audio signal (11b) to obtain at least one loudspeaker input signal (31b) based on the modified audio signal (21b);
Outputting at least one loudspeaker output signal (41) based on the at least one loudspeaker input signal (31b) by at least one loudspeaker.

13. The method of claim 12, wherein the audio signal (11b) is provided by a navigation system and is preferably a route guidance signal.

14. The method of claim 12, wherein the audio signal is provided by a mobile phone or by an in-vehicle telephony system.

15. The method of one of the preceding claims, wherein more than one, preferably more than two, audio signals (11b) from at least one, preferably from at least two, audio signal sources (10) are provided at the same time.

16. The method of one of the preceding claims, wherein the processing of the modified audio signal (21b) comprises setting the volume or the pitch of the loudspeaker input signal (31b) or providing the loudspeaker input signal (31b) with acoustic effects, in particular reverberation effects, or one or more combinations of the above.

17. The method of one of the preceding claims, wherein the at least one loudspeaker output signal (31b) is output by at least two, preferably at least three or four, loudspeakers.

18. The method of claim 17, wherein one loudspeaker output signal (41) output by one of the loudspeakers shows a time delay or volume difference with respect to at least one other loudspeaker output signal (41) output by at least one of the other loudspeakers.

19. The method of one of the preceding claims, wherein the processing of the modified audio signal (21b) comprises generating a virtual loudspeaker to output the loudspeaker output signal (41) at a pre-determined spatial position.

20. The method claim 19, wherein the virtual loudspeaker moves.

21. The method of one of the preceding claims, wherein the controlling of the output of the audio signal (11b), preferably the processing of the modified audio signal (21b), can be adjusted manually or verbally by one or more than one passengers in the vehicle, preferably by the driver of the vehicle.

22. The method of one of the preceding claims, wherein the content of the audio signal (11b) comprises a route guidance information, and wherein the processing of the modified audio signal (21b) is performed such that one loudspeaker output signal (41) is output by one or two loudspeakers located at a position in the vehicle corresponding to the route guidance information.

23. Computer program product comprising one or more computer readable media having computer-executable instructions for performing the steps of the method of one of the preceding claims.

## Patentansprüche

1. Kommunikationssystem, das zur Steuerung der Ausgabe eines Audiosignals konfiguriert und in einem Fahrzeug installiert ist, umfassend:
zumindest eine Audiosignalquelle (10), die konfiguriert ist, um zumindest ein Audiosignal (11b) bereitzustellen;
eine Signalanalyseeinrichtung (20b), die konfiguriert ist, um einen Inhalt und eine Quelle des Audiosignals (11b) auf Grundlage des Audiosignals zu bestimmen und das Audiosignal (11b) zu modifizieren, um ein modifiziertes Audiosignal (21b) zu erhalten, das zusätzliche Informationen enthält; wobei die zusätzlichen Informationen den bestimmten Inhalt und die bestimmte Quelle des Audiosignals (11b) umfassen;
eine Signalverarbeitungseinrichtung (30), die einen Eingang zum Empfangen des modifizierten Audiosignals (21b) und einen Ausgang zum Ausgeben von zumindest einem Lautsprechereingangssignal (31b) umfasst und die konfiguriert ist, um das modifizierte Audiosignal (21b) abhängig von dem bestimmten Inhalt und der bestimmten Quelle des Audiosignals (11b) zu verarbeiten, um das zumindest eine Lautsprechereingangssignal (31b) auf Grundlage des modifizierten Audiosignals (21b) zu erhalten; und
ein Lautsprechersystem (40), das zumindest einen Lautsprecher umfasst, der in dem Fahrzeug angebracht ist und einen Eingang zum Empfangen des zumindest einen Lautsprechereingangssignals (31b) und einen Ausgang zum Ausgeben von zumindest einem Lautsprecherausgangssignal (41) auf Grundlage des zumindest einen Lautsprecheingangssignals (31b) umfasst.

2. Kommunikationssystem nach Anspruch 1, wobei die zumindest eine Audiosignalquelle (10) ein Navigationssystem ist und das Audiosignal (11b) verzugsweise ein Routenführungssignal ist.

3. Kommunikationssystem nach Anspruch 1, wobei die zumindest eine Audiosignalquelle (10) ein Mobiltelefon oder ein fahrzeuginternes Telefoniesystem ist.

4. Kommunikationssystem nach einem der vorhergehenden Ansprüche, wobei die Signalanalyseeinrichtung (20b) konfiguriert ist, um mehr als ein Audiosignal (11b), vorzugsweise mehr als zwei Audiosignale, von zumindest einer Audiosignalquelle (10), vorzugweise von zumindest zwei Audiosignalquellen, gleichzeitig zu empfangen.

5. Kommunikationssystem nach einem der vorhergehenden Ansprüche, wobei die Signalverarbeitungseinrichtung (30) konfiguriert ist, um die Lautstärke oder die Tonhöhe des zumindest einen Lautsprechereingangssignals (31b) einzustellen oder das Lautsprechereingangssignal (31b) mit akustischen Effekten, insbesondere Hall-Effekten, bereitzustellen, oder zu einem oder mehreren der Vorstehenden konfiguriert ist.

6. Kommunikationssystem nach einem der vorhergehenden Ansprüche, wobei das Lautsprechersystem (40) zumindest zwei Lautsprecher, vorzugsweise zumindest drei oder vier Lautsprecher, umfasst.

7. Kommunikationssystem nach Anspruch 6, wobei ein Lautsprechereingangssignal (31b) derart durch Verarbeiten eines modifizierten Audiosignals (21b) erhalten wird, dass ein Lautsprecherausgangssignal (41), das auf dem einen Lautsprechereingangssignal (31b) basiert und durch einen der Lautsprecher ausgegeben wird, eine Zeitverzögerung oder Lautstärkedifferenz in Bezug auf zumindest ein anderes Lautsprecherausgangssignal (41) zeigt, das durch zumindest einen der anderen Lautsprecher ausgegeben wird.

8. Kommunikationssystem nach einem der vorhergehenden Ansprüche, das einen virtuellen Lautsprecher umfasst, um das Lautsprecherausgangssignal an einer bestimmten räumlichen Position auszugeben, wobei der virtuelle Lautsprecher durch die Signalverarbeitungseinrichtung (30b) generiert wird.

9. Kommunikationssystem nach Anspruch 8, wobei der virtuelle Lautsprecher beweglich ist.

10. Kommunikationssystem nach einem der vorhergehenden Ansprüche, wobei das Kommunikationssystem, vorzugsweise die Signalverarbeitungseinrichtung (30b), konfiguriert ist, um manuell oder verbal durch einen oder mehr als einen Passagier in dem Fahrzeug eingestellt zu werden, vorzugsweise durch den Fahrer des Fahrzeugs.

11. Kommunikationssystem nach einem der vorhergehenden Ansprüche, wobei der Inhalt des Audiosignals (11b) Routenführungsinformationen umfasst und wobei ein Lautsprecherausgangssignal (41) durch einen oder zwei Lautsprecher ausgegeben wird, der sich an einer Position in dem Fahrzeug befindet bzw. die sich an einer Position in dem Fahrzeug befinden, die den Routenführungsinformationen entspricht.

12. Verfahren zum Steuern der Ausgabe eines Audiosignals in einem in einem Fahrzeug installierten Kommunikationssystem, das die Folgenden Schritte umfasst:
Bereitstellen von zumindest einem Audiosignal (11b);
Bestimmen eines Inhalts und einer Quelle des Audiosignals (11b) auf Grundlage des Audiosignals;
Modifizieren des Audiosignals (11b), um ein modifiziertes Audiosignal (21b) zu erhalten, das zusätzliche Informationen enthält; wobei die zusätzlichen Informationen den bestimmten Inhalt und die bestimmte Quelle des Audiosignals (11b) umfassen;
Verarbeiten des modifizierten Audiosignals (21b) abhängig von dem Inhalt und der Quelle des Audiosignals (11b), um zumindest ein Lautsprechereingangssignal (31b) auf Grundlage des modifizierten Audiosignals (21b) zu erhalten;
Ausgeben von zumindest einem Lautsprecherausgangssignal (41) auf Grundlage des zumindest einen Lautsprechereingangssignals (31b) durch zumindest einen Lautsprecher.

13. Verfahren nach Anspruch 12, wobei das Audiosignal (11b) durch ein Navigationssystem bereitgestellt wird und vorzugsweise ein Routenführungssignal ist.

14. Verfahren nach Anspruch 12, wobei das Audiosignal durch ein Mobiltelefon oder durch ein fahrzeuginternes Telefoniesystem bereitgestellt wird.

15. Verfahren nach einem der vorhergehenden Ansprüche, wobei mehr als ein Audiosignal (11b), vorzugsweise mehr als zwei Audiosignale, von zumindest einer Audiosignalquelle (10), vorzugweise von zumindest zwei Audiosignalquellen, geleichzeitig bereitgestellt wird bzw. werden.

16. Verfahren nach einem der vorhergehenden Ansprüche, wobei das Verarbeiten des modifizierten Audiosignals (21b) das Einstellen der Lautstärke oder der Tonhöhe des Lautsprechereingangssignals (31b) oder das Bereitstellen des Lautsprechereingangssignals (31b) mit akustischen Effekten, insbesondere Hall-Effekten, oder eine oder mehrere Kombinationen der Vorstehenden umfasst.

17. Verfahren nach einem der vorhergehenden Ansprüche, wobei das zumindest eine Lautsprecherausgangssignal (31b) von zumindest zwei Lautsprechern, vorzugsweise von zumindest drei oder vier Lautsprechern, ausgegeben wird.

18. Verfahren nach Anspruch 17, wobei ein Lautsprecherausgangssignal (41), das durch einen der Lautsprecher ausgegeben wird, eine Zeitverzögerung oder Lautstärkedifferenz in Bezug auf zumindest ein anderes Lautsprecherausgangssignal (41) zeigt, das durch zumindest einen der anderen Lautsprecher ausgegeben wird.

19. Verfahren nach einem der vorhergehenden Ansprüche, wobei das Verarbeiten des modifizierten Audiosignals (21b) das Generieren eines virtuellen Lautsprechers umfasst, um das Lautsprecherausgangssignal (41) an einer vorbestimmten räumlichen Position auszugeben.

20. Verfahren nach Anspruch 19, wobei sich der virtuelle Lautsprecher bewegt.

21. Verfahren nach einem der vorhergehenden Ansprüche, wobei das Steuern der Ausgabe des Audiosignals (11b), vorzugsweise das Verarbeiten des modifizierten Audiosignals (21b), manuell oder verbal durch einen oder mehr als einen Passagier in dem Fahrzeug eingestellt werden kann, vorzugsweise durch den Fahrer des Fahrzeugs.

22. Verfahren nach einem der vorhergehenden Ansprüche, wobei der Inhalt des Audiosignals (11b) Routenführungsinformationen umfasst und wobei das Verarbeiten des modifizierten Audiosignals (21b) derart durchgeführt wird, dass ein Lautsprecherausgangssignal (41) durch einen oder zwei Lausprecher ausgegeben wird, der sich an einer Position in dem Fahrzeug befindet bzw. die sich an einer Position in dem Fahrzeug befinden, die den Routenführungsinformationen entspricht.

23. Computerprogrammprodukt, das ein computerlesbares Medium oder mehrere computerlesbare Medien umfasst, das bzw. die computerausführbare Anweisungen zum Durchführen der Schritte des Verfahrens nach einem der vorhergehenden Ansprüche aufweist bzw. aufweisen.

## Revendications

1. Système de communication configuré pour contrôler la restitution d'un signal audio et installé dans un véhicule, comprenant
au moins une source de signal audio (10) configurée pour fournir au moins un signal audio (11b) ;
un moyen d'analyse de signaux (20b) configuré pour déterminer un contenu et une source du signal audio (11b) sur la base du signal audio et pour modifier le signal audio (11b) pour obtenir un signal audio modifié (21b) contenant des informations supplémentaires ; dans lequel les informations supplémentaires comprennent le contenu et la source déterminés du signal audio (11b) ;
un moyen de traitement de signaux (30) comprenant une entrée pour recevoir le signal audio modifié (21b) et une sortie pour délivrer au moins un signal d'entrée de haut-parleur (31b), et configuré pour traiter le signal audio modifié (21b) en fonction du contenu et de la source déterminés du signal audio (11b) pour obtenir au moins un signal d'entrée de haut-parleur (31b) sur la base du signal audio modifié (21b) ; et
un système de haut-parleurs (40) comprenant au moins un haut-parleur monté dans le véhicule et comprenant une entrée pour recevoir l'au moins un signal d'entrée de haut-parleur (31b) et une sortie pour délivrer au moins un signal de sortie de haut-parleur (41) sur la base de l'au moins un signal d'entrée de haut-parleur (31b).

2. Système de communication selon la revendication 1, dans lequel l'au moins une source de signal audio (10) est un système de navigation et le signal audio (11b) est de préférence un signal de guidage d'itinéraire.

3. Système de communication selon la revendication 1, dans lequel l'au moins une source de signal audio (10) est un téléphone mobile ou un système de téléphonie interne au véhicule.

4. Système de communication selon l'une quelconque des revendications précédentes, dans lequel le moyen d'analyse de signaux (20b) est configuré pour recevoir au même moment plus d'un, de préférence plus de deux, signaux audio (11b) d'au moins une, de préférence d'au moins deux, sources de signal audio (10).

5. Système de communication selon l'une quelconque des revendications précédentes, dans lequel le moyen de traitement de signaux (30) est configuré pour régler le volume ou la tonalité de l'au moins un signal d'entrée de haut-parleur (31b) ou pour fournir le signal d'entrée de haut-parleur (31b) avec des effets acoustiques, en particulier avec des effets de réverbération, ou une ou plusieurs combinaisons de ce qui précède.

6. Système de communication selon l'une quelconque des revendications précédentes, dans lequel le système de haut-parleurs (40) comprend au moins deux, de préférence au moins trois ou quatre, haut-parleurs.

7. Système de communication selon la revendication 6, dans lequel un signal d'entrée de haut-parleur (31b) est obtenu par traitement d'un signal audio modifié (21b) de sorte qu'un signal de sortie de haut-parleur (41) basé sur le signal d'entrée de haut-parleur (31b) et délivré par un des haut-parleurs présente un retard temporel ou une différence de volume par rapport à au moins un autre signal de sortie de haut-parleur (41) délivré par au moins un des autres haut-parleurs.

8. Système de communication selon l'une quelconque des revendications précédentes, comprenant un haut-parleur virtuel pour délivrer le signal de sortie de haut-parleur à une position spatiale spécifique, dans lequel le haut-parleur virtuel est généré par le moyen de traitement de signaux (30b).

9. Système de communication selon la revendication 8, dans lequel le haut-parleur virtuel est mobile.

10. Système de communication selon l'une quelconque des revendications précédentes, dans lequel le système de communication, de préférence le moyen de traitement de signaux (30b), est configuré pour être ajusté manuellement ou verbalement par un ou plus d'un des passagers dans le véhicule, de préférence par le conducteur du véhicule.

11. Système de communication selon l'une quelconque des revendications précédentes, dans lequel le contenu du signal audio (11b) comprend une information de guidage d'itinéraire, et dans lequel un signal de sortie de haut-parleur (41) est délivré par un ou deux haut-parleurs situés à une position dans le véhicule correspondant à l'information de guidage d'itinéraire.

12. Procédé de contrôle de la restitution d'un signal audio dans un système de communication installé dans un véhicule, comprenant les étapes de :
fourniture d'au moins un signal audio (11b) ;
détermination d'un contenu et d'une source du signal audio (11b) sur la base du signal audio ;
modification du signal audio (11b) pour obtenir un signal audio modifié (21b) contenant des informations supplémentaires ; dans lequel les informations supplémentaires comprennent le contenu et la source déterminés du signal audio (11b) ;
traitement du signal audio modifié (21b) en fonction du contenu et de la source du signal audio (11b) pour obtenir au moins un signal d'entrée de haut-parleur (31b) sur la base du signal audio modifié (21b) ;
restitution d'au moins un signal de sortie de haut-parleur (41) sur la base d'au moins un signal d'entrée de haut-parleur (31b) par au moins un haut-parleur.

13. Procédé selon la revendication 12, dans lequel le signal audio (11b) est fourni par un système de navigation et est de préférence un signal de guidage d'itinéraire.

14. Procédé selon la revendication 12, dans lequel le signal audio est fourni par un téléphone mobile ou par un système de téléphonie interne au véhicule.

15. Procédé selon l'une quelconque des revendications précédentes, dans lequel plus d'un, de préférence plus de deux, signaux audio (11b) d'au moins une, de préférence d'au moins deux, sources de signal audio (10) sont fournis au même moment.

16. Procédé selon l'une quelconque des revendications précédentes, dans lequel le traitement du signal audio modifié (21b) comprend un réglage du volume ou de la tonalité du signal d'entrée de haut-parleur (31b) ou une fourniture du signal d'entrée de haut-parleur (31b) avec des effets acoustiques, en particulier avec des effets de réverbération, ou une ou plusieurs combinaisons de ce qui précède.

17. Procédé selon l'une quelconque des revendications précédentes, dans lequel l'au moins un signal de sortie de haut-parleur (31b) est délivré par au moins deux, de préférence au moins trois ou quatre, haut-parleurs.

18. Procédé selon la revendication 17, dans lequel un signal de sortie de haut-parleur (41) délivré par un des haut-parleurs présente un retard temporel ou une différence de volume par rapport au moins un autre signal de sortie de haut-parleur (41) délivré par au moins un des autres haut-parleurs.

19. Procédé selon l'une quelconque des revendications précédentes, dans lequel le traitement du signal audio modifié (21b) comprend la génération d'un haut-parleur virtuel pour délivrer le signal de sortie de haut-parleur (41) à une position spatiale prédéterminée.

20. Procédé selon la revendication 19, dans lequel le haut-parleur virtuel est mobile.

21. Procédé selon l'une quelconque des revendications précédentes, dans lequel le contrôle de la restitution du signal audio (11b), de préférence le traitement du signal audio modifié (21b), peut être ajusté manuellement ou verbalement par un ou plus d'un des passagers dans le véhicule, de préférence par le conducteur du véhicule.

22. Procédé selon l'une quelconque des revendications précédentes, dans lequel le contenu du signal audio (11b) comprend une information de guidage d'itinéraire, et dans lequel le traitement du signal audio modifié (21b) est effectué de sorte qu'un signal de sortie de haut-parleur (41) est délivré par un ou deux haut-parleurs situés à une position dans le véhicule correspondant à l'information de guidage d'itinéraire.

23. Produit-programme d'ordinateur comprenant un ou plusieurs supports lisibles par ordinateur ayant des instructions exécutables par ordinateur pour effectuer les étapes du procédé selon l'une quelconque des revendications précédentes.
